# EUROPEAN PATENT SPECIFICATION

(11) **EP 4 006 249 B1**
(45) Date of publication and mention of the grant of the patent: **29.05.2024**
(21) Application number: 20210510.2
(22) Date of filing: 30.11.2020
(51) Int. Cl.: E04B 2/74, H02G 3/38, H02G 3/04, E04G 21/18, E04F 21/18, E04B 2/78, E04B 2/76

(54) **PLASTERBOARD WALL, PARTICULARLY FOR HOUSING ELECTRICAL CABLES AND PIPES, AND METHOD FOR MAKING SUCH PLASTERBOARD WALL**
TROCKENWAND, INSBESONDERE ZUR AUFNAHME VON ELEKTRISCHEN KABELN UND ROHREN UND VERFAHREN ZU DEREN HERSTELLUNG
CLOISON SÈCHE, EN PARTICULIER POUR ACCUEILLIR DES CÂBLES ÉLECTRIQUES ET DES TUYAUX ET SON PROCÉDÉ DE CONSTRUCTION

(43) Date of publication of application: 01.06.2022
(73) Proprietor: Tassi, Alberto, 50067 Rignano Sull'Arno (Firenze) (IT); Tassi, Stefano, 50012 Bagno a Ripoli (Firenze) (IT)
(72) Inventor: Tassi, Alberto, 50067 Rignano Sull'Arno (Firenze) (IT); Tassi, Stefano, 50012 Bagno a Ripoli (Firenze) (IT)
(74) Representative: Milli, Simone

(56) References cited:
- CA-A1- 2 976 939
- DE-U1-202004 014 587
- FR-A1- 2 975 413
- US-B1- 6 983 569

## Description

The present invention relates to a kit for mounting a plasterboard wall, especially housing electrical cables and piping, such as water supply pipes or air-conditioning pipes, as well as its construction method.

According to the current state of the art, in order to carry electrical cables or piping, a chase is made on the wall which, for example, houses the electrical cables from the central box to the various switches.

Obviously, in the case of the restructuring of rooms, this results in twice the effort, that is to say, firstly the wall is built and then the housing for the cables and piping is made, meaning that it must be partly broken.

In the traditional plasterboard installation system, once the panelling is closed and finished, the systems are no longer accessible, eliminating any possibility of future expansion.

Exemples of plasterboard wall are given on DE 202004014587 (U1) and CA 2976939 (A1).

The aim of the invention is to overcome the above-mentioned drawbacks of plasterboard walls of known type, particularly for housing electrical cables and piping which allows the rooms in a building to be modified without the need for the intervention of builders, thereby saving time and limiting the costs of the required variations.

In the context of the above-mentioned purpose, an aim of the invention is to make a plasterboard wall, particularly housing electrical cables and piping, which is flexible and suitable for receiving changes, modernisations and expansion of the rooms on which it is mounted.

Yet another aim of the invention is to make a plasterboard wall, especially housing electrical cables and piping, with means which are easily available on the market and using materials of common use, in such a way that the device is economically competitive.

This purpose, as well as these and other aims, which are described in more detail below, are achieved by kit for mounting a plasterboard wall, especially housing electrical cables and piping according to the invention, comprising the technical features described in claim 1 or in one of its dependent claims.

The dependent claims correspond to possible different embodiments of the invention.

In particular, a plasterboard wall is disclosed, especially housing electrical cables and piping, comprising at least one pair of uprights resting on the ground, wherein each of the uprights has, on at least a first face of the wall, a first surface for fixing at least a first panel, which lies in the plane defined by the first face.

The panel also comprises at least one box-shaped body for containing cables, wires, pipes and the like. The box-shaped body can be positioned on the first face and it is designed to be connected by fixing means to at least one of the uprights and/or to the first panel.

In this case, the uprights may be, for example, attached, on the opposite face relative to the above-mentioned first face, to an existing wall to be covered.

More normally, the wall comprises:
- at least one pair of uprights resting on the ground;
- each of these uprights has, on opposite faces of the wall, a first and a second fixing surface, respectively for at least a first and at least a second panel;
- the first and second panels form, respectively, a first and a second face of the division wall between two zones of a same room, in such a way as to define a hollow space between the panels;
- at least one box-shaped body designed to contain cables, wires, pipes and the like, which can be positioned on the first face and/or on the second face and which is also designed to be connected, by fixing means, to at least one between an upright of the pair of uprights and to the first panel (if positioned in the first face) or to the second panel (if positioned in the second face, but, obviously, certainly not to both the first and the second panels simultaneously).

According to some examples, the uprights have, in a first case, one or more openings for housing a respective portion of the box-shaped body only on one face; in a second case, the grooved elements are assembled both on one face and on the opposite face of the wall and the upright will therefore have at least two opposite openings.

Advantageously, the box-shaped body is interposed between the first panel, fixed to the first surface of the pair of uprights, and a first additional panel, also to be fixed to the first surface of the uprights, substantially coplanar with the first panel and preferably positioned above it, relative to the ground, in such a way that the first face of the wall has the first panel beneath the first additional panel and the box-shaped body is interposed between the two panels.

In this case, the uprights have openings only on the first surface and, therefore, the second face comprises a single second panel.

Alternatively, with uprights with openings on both surfaces, the box-shaped body is interposed between the second panel and a second additional panel substantially coplanar with each other, also in this case positioned one (the second additional panel) above the ground, with the second additional panel being also fixed to the second surface.

According to this variant, the cables, wires and pipes are passed and therefore accessible through sockets or switches, on both faces of the wall allowing the use by the users of both the areas formed by the division of the room.

The fixing between the uprights and the box-shaped body may be achieved by screws, plugs and similar systems or by means of a crosspiece for supporting the box-shaped body, in which there is a central portion for fixing to the respective upright and at least one peripheral portion for fixing to the first or to the second wall.

Another aspect of the invention relates to the method for making the plasterboard wall, especially housing electrical cables and piping, as mentioned above, the method comprising the features of appended claim 10.

In order to position the box-shaped body, on which the sockets and switches will preferably be mounted, at a predetermined height so as to make it more convenient for the users, at least one additional panel is fixed above the first and/or the second panel, fixing it to the first or second surface of the uprights. The distance between the two panels, the additional upper one, and the first or second lower panel, must allow the interposition of the box-shaped body between these two panels, that is to say, between the first panel and the first additional panel, which are coplanar with each other, or between the second panel and the second additional, which are coplanar with each other.

Preferably, in order to associate the box-shaped body to the uprights a crosspiece for supporting the box-shaped body is mounted, fixing a central portion of the crosspiece to the respective upright. Therefore, the peripheral portions of the crosspiece are fixed to the first panel and to the first additional panel or to the second panel and to the second additional panel.

In order to facilitate assembly of the additional panels and eliminate the risk of accidents, after the first or the second panel - depending on whether the first or the second additional panel is mounted - have been fixed, the method comprises:
- applying at least one supporting template for the additional panel to be mounted, resting the lower part of the insertion body of a template on at least a portion of the upper edge of the first or second panel,
- placing the portion of the lower edge of the first or second additional panel to be fixed, on the upper part of the insertion body,
- fixing the first or the second additional panel to the pair of uprights,
- a gripping handle integral with the insertion body removes the template by rotating it substantially by 90° about a horizontal axis parallel to the ground and substantially normal relative to the direction of extension of the wall, in such a way as to simultaneously free both the lower part and the upper part of the inserting body from the mutual support given, respectively, by contact with the first or the second panel and with the additional panel.

In this way, the operation can also be easily carried out even by a single operator, thereby saving labour costs.

The kit comprises a template for making a plasterboard wall, especially housing electrical cables and piping, as described above. The above-mentioned template therefore comprises an insertion body, integral with a handle for gripping by the user, which has a lower part for resting on a first or a second panel positioned below and an upper support part for the additional panel to be fixed.

In particular, in order to render the template even more functional, the lower part of the insertion body has a recess for insertion of a portion of the upper edge of the first or second panel, so as to facilitate the connection with the panel fixed below.

For the same purpose, the upper part of the insertion body comprises a supporting protrusion for the portion of the lower edge of the additional panel to be mounted, so as to free the hands of the operator.

Further features and advantages of the invention are more apparent in the detailed description below, with reference to a preferred, non-limiting embodiment of the kit for mounting a plasterboard wall, especially housing electrical cables and piping, illustrated by way of example and without limiting the scope of the invention, which is defined by the appended claims, with the aid of the accompanying drawings, in which:
Figure 1A is a perspective view of the wall 1, with the sheets 7 partly removed;
Figure 1B is a perspective view of the wall 101 with the slabs 7 partly removed;
Figure 2A shows a first variant of the wall 1, wherein the box-shaped body 5 is made in the substantially middle part of the face 1a;
Figure 2B shows a second variant of the wall 1, wherein the box-shaped body 5 is made in the part substantially beneath, that is, closest to the ground, of the face 1a;
Figure 3A is a perspective view illustrating a portion of the box-shaped body 5 associated with a portion of the upright 2 for making the wall 1;

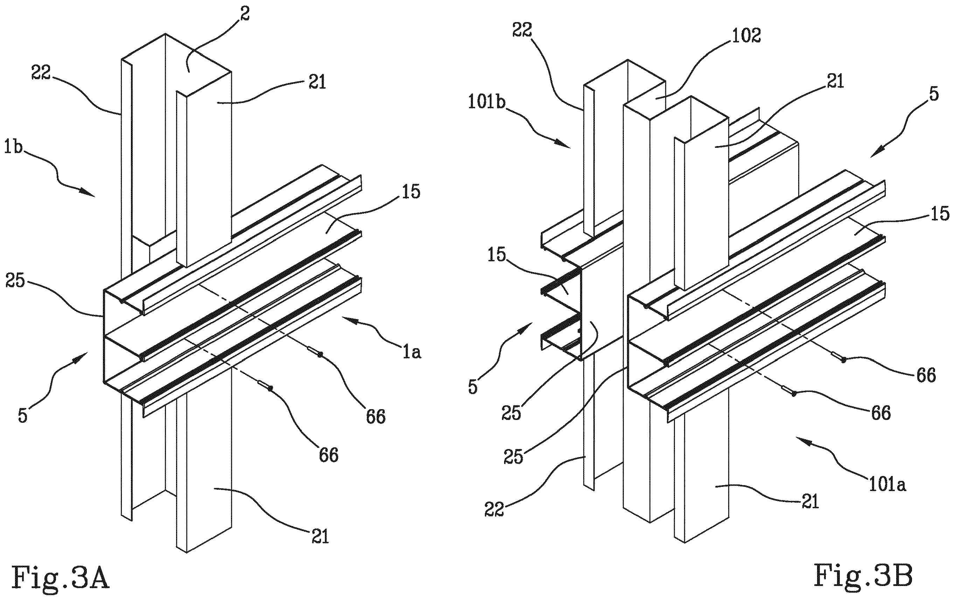

Figure 3A is a perspective view illustrating a portion of the box-shaped body 5 associated with a portion of the upright 102 for making the wall 101;

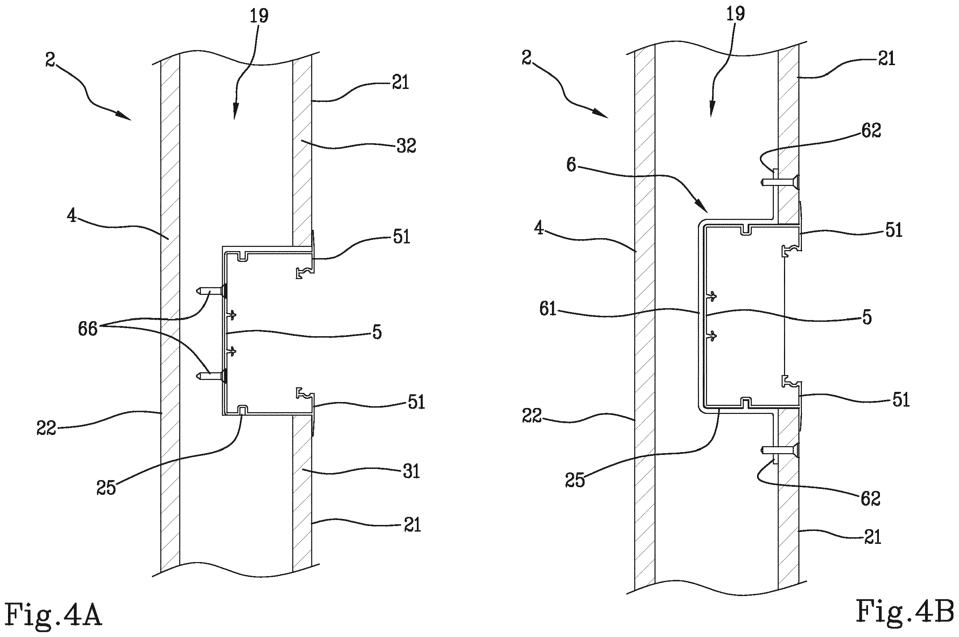

Figure 4A is a cross-section normal relative to the ground 9 of a box-shaped body 5 associated with an upright 2 by means of screws 66 mounted directly;
Figure 4B is a cross-section normal relative to the ground 9 of a box-shaped body 5 associated with an upright 2 by means of the crosspiece 6;

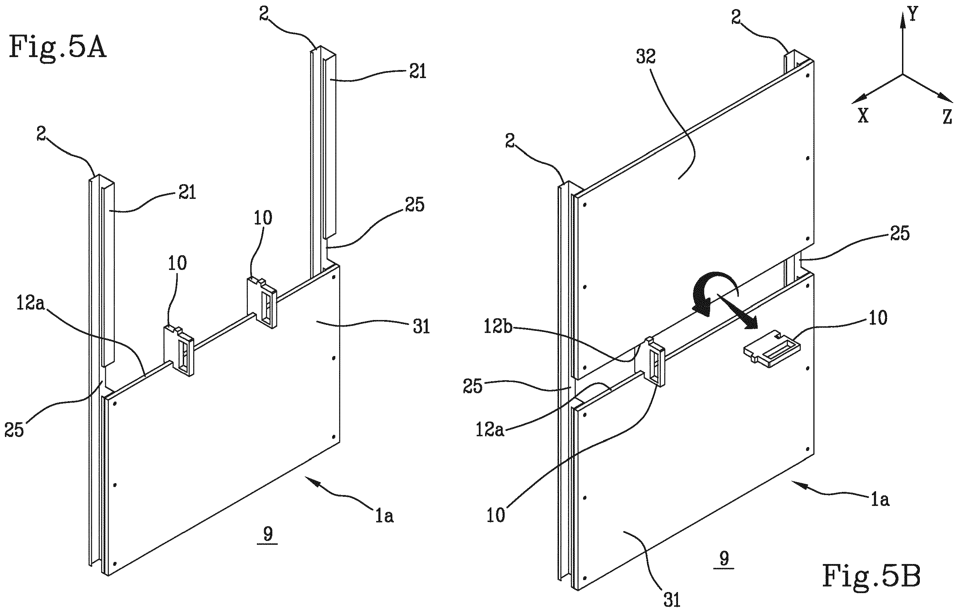

Figure 5A shows a step of the method for making the wall 1 in which, after the first panel 31 has been fixed, the additional panel 32 is assembled using templates 10;
Figure 5B shows a step of the method for making the wall 1 in which, after fixing the panel 32, the templates 10 are removed;

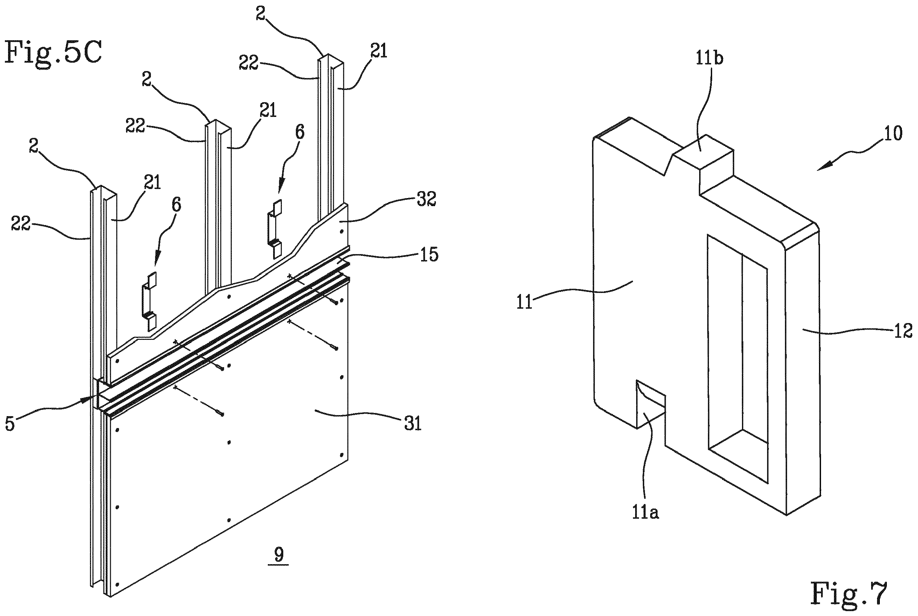

Figure 5C shows a step of the method for making the wall 1 in which, after fixing the panels 31 and 32, the box-shaped body 5 is assembled using crosspieces 6;

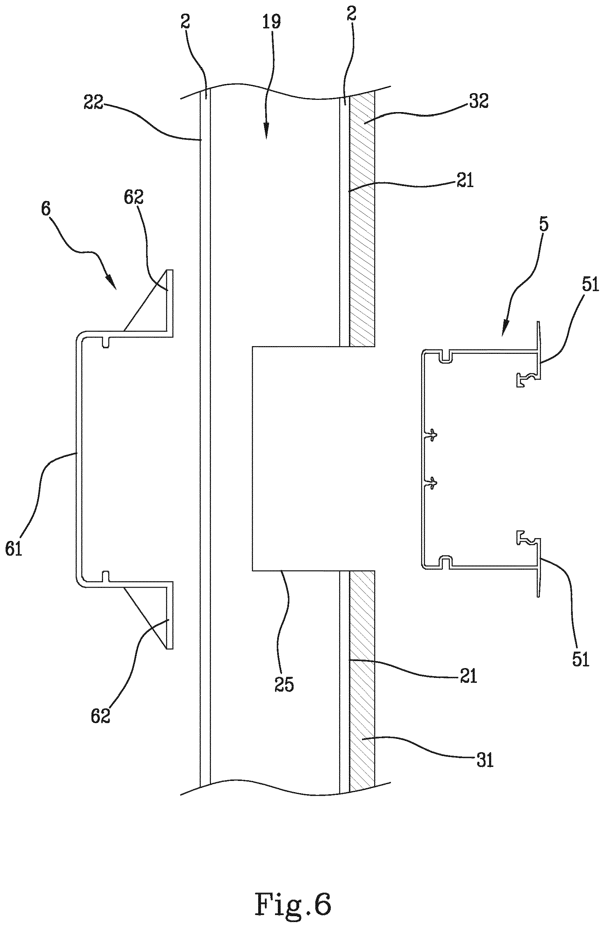

Figure 6 shows, with a cross-section at right angles to the ground 9, a step of the method for making the wall 1 in which the box-shaped body 5 is associated with the upright 2 by means of the prior fixing of the crosspiece 6;
Figure 7 is a perspective view of the template 10.

The accompanying drawings show a preferred embodiment of a kit for mounting a plasterboard wall, especially housing electrical cables 8 and piping, which plasterboard is denoted in its entirety by the numeral 1 or 101 and which comprises three uprights 2 or 102 resting on the ground 9, extending along a vertical axis Y, substantially normal relative to the ground 9 and defining the direction of extension in height of the wall 1 or 101.

The axis Y is substantially perpendicular to a horizontal axis X substantially parallel both to the ground and to the longitudinal direction of extension of the wall 1 or 101.

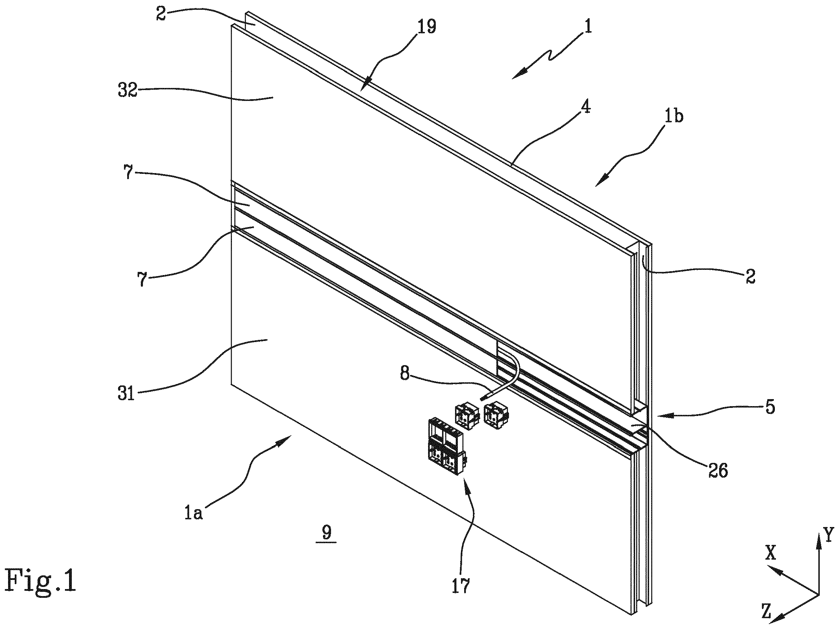

Lastly, a third axis Z is defined substantially perpendicular to the axes X and Y and substantially parallel to the ground 9 (Figure 1A).

The uprights 2 or 102 have, on a first and a second face 1a and 1b of the wall 1, or 101a and 101b of the wall 101, opposite to each other, a first and a second surface 21 and 22, facing towards the outside of the wall 1 and 101.

According to a first embodiment, the wall 1 has the uprights 2 equipped with a single opening 25, formed in the surface 21, which acts as housing for those portions of a box-shaped body 5 to be fixed to the uprights 2 (Figure 3A).

In this case, the surfaces 21 and 22 of the uprights 2 are for fixing a respective first and a second panel 31 and 4 which lie, respectively, in the plane defined by the first and second face 1a and b, in such a way as to form a hollow space 19 between the two panels 31 and 4 (Figures 1A). The box-shaped body 5 is interposed between the first panel 31 and a first additional panel 32, which is also fixed, like the panel 31, to the surface 21 of the uprights 2. The two panels 31 and 32 forming the first face 1a of the wall 1 are substantially coplanar and substantially parallel to the panel 4 which, by itself, defines the face 1b of the wall 1, opposite the face 1a. The wall 1 also comprises a box-shaped body 5, for containing cables 8, wires, pipes and the like, positioned on the first face 1a, and connected, by fixing means, both to the uprights 2 and to the panels 31 and 32. Alternatively, the wall 101 is such that each of the uprights 202 comprises, both on the first and on the second surface 21 and 22, an opening 25 respectively, each of which acts as a housing for those portions of the corresponding box-shaped body 5 to be fixed to the uprights 202: a box-shaped body 5 on one side and the other. In this case, the two openings 25 are opposite each other and positioned preferably at the same height from the ground 9, that is to say, symmetrically relative to the direction V normal to the ground (Figure 3B).

According to this variant, the surfaces 21 and 22 of the uprights 102 are fixed to a respective first and second panel 31 and 41 which lie in the corresponding plane defined by the first and the second face 101a and 101b, in such a way as to define, also in this situation, a hollow space 19 between the two panels 31 and 41 (Figures 1B).

The two box-shaped bodies 5, for containing different groups of cables 8, wires, pipes and the like, can be positioned on the first and second face 101a and 101b. Each of them is designed to be connected, by fixing means, both to the surfaces 21 and 22 of the uprights 102 and to the panels 31 and 41.

Each of the two box-shaped bodies 5 is therefore interposed between the second panel 41 and a second additional panel 42 substantially coplanar with the second panel 41 and also, like the panel 41, to be fixed to the second surface 22.

According to both the embodiments, the body 5 has at least one outer edge 51 for connection to the pair of panels 31 and 32 (wall 1) and also to the pair of panels 41 and 42 (wall 101).

Each box-shaped body 5 is also covered with a sheet 7 in such a way as to protect the elements contained therein. The sheet 7 can engage in a removable fashion with the outer edge 51 (Figures 3A, 3B, 4A and 4B).

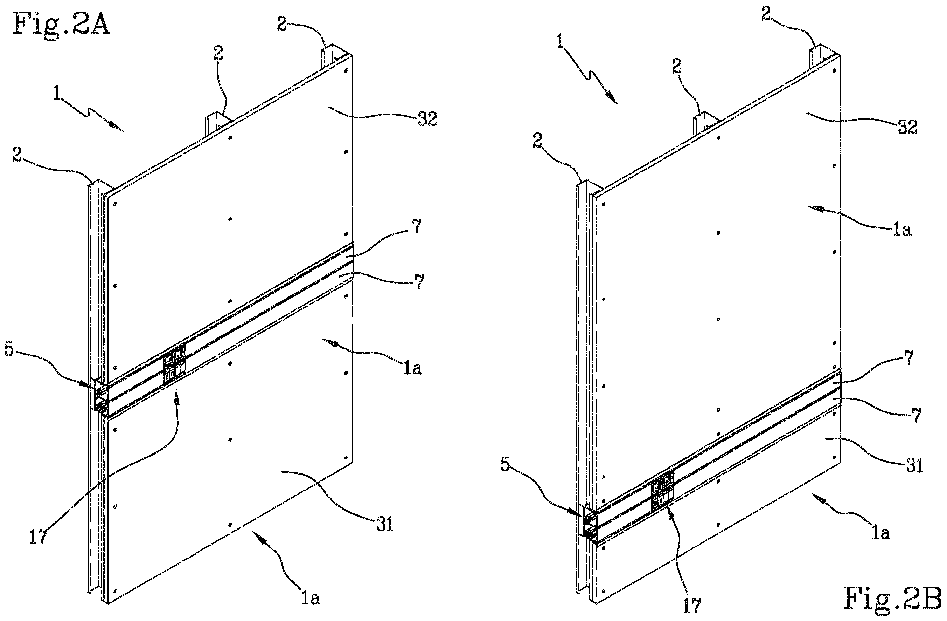

In the example shown in Figures 1A, 1B, 2A, 2B, 5A-5C, the box-shaped body 5 advantageously has a sheet-like element 15 which extends along the axis X.

For this reason, two sheets 7 are provided which are substantially identical to each other.

Advantageously, the sheets 7 are alternated with means for connection to the external user devices, such as power sockets (17) or switches.

The fixing means preferably comprise a crosspiece 6 for supporting the box-shaped body 5 and comprising a central portion 61 for fixing to the respective upright 2 or 102 and two peripheral portions 62 for fixing to the panels 31 and 32 (or also 41 and 42), by fixing means 69.

In this way, there is a more robust support.

Alternatively, the box-shaped body 5 is associated with the surface 21 or 22 directly, using prior art means (screws 66, plugs...)

In order to make the wall 1 or 101, firstly the uprights 2 or 102 are positioned on the ground 9 of the room to be divided, the first panel 31 is then fixed and, if necessary, the second panel 4 or 41, depending on whether the wall 1 or the wall 101 is to be made.

The panels 31 and 4 or 41 are fixed, respectively on the first and second surface 21 and 22 of each of the uprights 2 or 102, in such a way as to form a hollow space 19 between the two panels 31 and 4 (walls 1) or 31 and 41 (wall 101).

In order to make the wall 1, a first additional panel 32, coplanar with the panel 31, is also fixed to the first surface 21 of each of the uprights 2 at a distance from each other such as to allow the box-shaped body 5 to be interposed between the panels 31 and 32.

For the wall 101, after fixing the panels 31 and 32 on the uprights 102, the additional panel 42, coplanar with the panel 41, is then also fixed to the second surface 22 of the same uprights 102. In this case, too, the distance between the panels 41 and 42 must allow the other box-shaped body 5 to be interposed between said second additional panel 42.

With reference to Figures 5A-5C, the assembly of the panel 32 and 42 uses a template 10 which comprises an insertion body 11 integral with a handle 12 for gripping by the user.

The lower part 11a of the insertion body 11 of the template 10 rests on a portion of the upper edge of the first panel 31 (or of the second panel 41) (Figure 5A).

For this purpose, in order to favour the support solidity between the panel 31 (or 41) and the template 10, the lower part 11a of the body 11 has a recess 13 for insertion of a portion of the upper edge of the panel 31 (or 41) (Figure 7).

The portion of the lower edge of the additional panel 32 (or 42) is then placed on the upper part 11b of said insertion body 11 and is fixed to the uprights 2 (or 102) (Figure 5B).

In order to favour the stability of the panel 32 (or 42) to be fixed, in such a way as to free the hands of the operator, in the upper part 11b of the template 10 there is a supporting protrusion 14 for a portion of the lower edge of the first additional panel 31 (or of the second additional panel 42) (Figure 7).

At this point, having fixed the panel 32 (or 42), the template 10 is removed by rotating it on itself by approximately 90° about the axis Z (Figure 5C).

In order to favour the rotation, the handle 12 is provided.

In this way, the lower and upper parts 11a and 11b of the template 10 are freed from the mutual support of the panels 31 and 32 (or 41 and 42) allowing the operator to carry out an easy extraction.

As mentioned, each of the box-shaped bodies 5 is fixed to the uprights 2 or 102 directly or by means of the supporting crosspiece 6, as described above.

As illustrated in Figures 5A-5C, both the first panel 31 and the second panel 41, if present, are positioned below, that is to say, closer to the ground 9, with respect to the first additional panel 32 or to the second additional panel 42.

At this point, the box-shaped body 5, which is still empty but designed to contain the cables 8, the wires, pipes and the like, is then positioned on the face 1a or 101a connecting it, using the above-mentioned fixing means, to the uprights 2 or 102 and therefore to the panels 31 and 32 and/or 41 and 42 (Figure 6).

The cables 8 and/or the wires and/or the pipes are then passed inside the box-shaped body 5 and they are protected by the covering sheet 7.

From the above description it may be seen how the invention achieves the preset purpose and aims and in particular the fact that a plasterboard wall is made, especially for housing electrical cables and piping, which makes it possible to modify the rooms in a building extremely easily and quickly, without the need to make chases on the new partition walls and thus avoiding the intervention of builders, thereby saving time and limiting the costs of the required variations.

In particular, the box-shaped bodies prepared for housing the passage of cables, wires and pipes allow the position of the sockets and the switches to be changed without any problem, as well as adding them and removing them as required.

Even in the case of an electrical fault, during modifications to television or telephone systems, as well as in the wiring of a room, for example, the intervention of a builder will no longer be necessary but access can simply be gained inside the box-shaped body simply by removing the covering sheet (or a part of it).

Another advantage of the invention is due to the fact that such a wall is very flexible, can be moved and modified as necessary, by modifying the height of the box-shaped body (and therefore the height of the sockets and switches) and it is therefore very disposed receive the changes, the modernisations and the extensions of the rooms on which it is mounted.

Lastly, the use of means which are easily available on the market and the use of common materials makes the device economically competitive. The invention can be modified and adapted in several ways without thereby departing from the scope of the appended claims.

Moreover, all the details of the invention may be substituted by other technically equivalent elements.

In practice, the materials used, as well as the dimensions, may be of any type, depending on requirements, provided that they are consistent with their production purposes.

## Claims

1. A kit for mounting a plasterboard wall (1, 101), particularly housing electrical cables (8) and piping, comprising:
- at least one pair of uprights (2, 102) arranged to rest on the ground (9);
- at least one first panel (31) and at least one first additional panel (32);
- each of said uprights (2, 102) having, on at least a first face (1a, 101a) of the wall (1), a first surface (21) for fixing the at least one first panel (31) lying in the plane defined by said first face (1a, 101a);
- at least one box-shaped body (5) connected to said uprights (2, 102) and having a longitudinal profile, an open side and a covering sheet closing it, in order to contain cables (8), wires, pipes and the like, which can be positioned on said first face (1a, 101a) and designed to be connected, by fixing means (6, 61, 62) to at least one between one upright (2, 102) of said pair of uprights (2, 102) and said at least a first panel (31);
**characterized in that**
said kit provides a template (10) comprising an insertion body (11) integral with a handle (12) for gripping by the user, said insertion body (11) having a lower part (11a) designed to rest on the at least one first panel (31) fixed to a pair of uprights (2, 102) and an upper supporting part (11b) for the at least one first additional panel (32) to be fixed on said pair of uprights (2, 102);
wherein said box-shaped body (5) is to be interposed between said first panel (31) and said first additional panel (32) substantially coplanar with said first panel (31), said first additional panel (32) being designed to be fixed to said first surface (21).

2. The kit according to the preceding claim, wherein each of said uprights (2, 102) comprises, on a second face (1b, 101b), opposite said first face (1a, 101a), a second surface (22) for fixing at least a second panel (4, 41) lying in the plane defined by said second face (1b, 101b) parallel to the plane defined by said first face (1a, 101a), so as to form a gap (19) between said at least a first panel (31) and said at least a second panel (4, 41).

3. The kit according to any one of the preceding claims, wherein at least one upright (2) of said uprights (2, 202) comprises, on at least one between said first surface (21) and said second surface (22), at least one flaring (25) for housing at least a portion of said box-shaped body (5).

4. The kit according to the preceding claim when it depends on claim 2, wherein said box-shaped body (5) is interposed between said second panel (41) and a second additional panel (42) substantially coplanar with said second panel (41), said second additional panel (42) being designed to be fixed to said second surface (22).

5. The kit according to claim 2, wherein said box-shaped body (5) has at least one outer edge (51) designed to be connected at least to said first panel (31).

6. The kit according to the preceding claim, comprising at least one sheet (7) for covering said box-shaped body (5), for protecting the elements contained inside said box-shaped body (5) and removably engaging with said at least one outer edge (51).

7. The kit according to any one of the preceding claims, wherein said fixing means (6, 61, 62) comprise a crosspiece (6) for supporting said box-shaped body (5) comprising a central portion (61) for fixing to the respective upright (2, 102) and at least one peripheral portion (62) for fixing to said at least a first panel (31).

8. The kit according to any of precededing claims, wherein said lower part (11a) comprises a recess (13) for insertion of at least a portion of the upper edge of said first panel (31).

9. The kit according to the preceding claim, wherein said upper part (11b) comprises a projection (14) for supporting at least a portion of the lower edge of said first additional panel (31).

10. A method for making a plasterboard wall (1, 101), especially housing electrical cables (8) and piping, with a kit according to claim 1, comprising a series of steps consisting of:
- positioning at least one pair of uprights (2, 102) on the ground (9) of the room to be divided, each of said uprights (2, 102) having, on a first face (1a, 101a) and a second face (1b, 101b), opposite said first face (1a, 101a), of the wall (1), a first surface (21) and a second surface (22),
- fixing at least a first panel (31) and at least a second panel (4, 41), respectively, on said first surface (21) and on said second surface (22), in such a way as to form a hollow space (19) between said at least a first panel (31) and said at least a second panel (4, 41),
- positioning at least one box-shaped body (5) designed to contain cables (8), wires, pipes and the like, on said first face (1a, 101a), connecting it, using fixing means (6, 61, 62), to at least one between an upright (2, 102) of said pair of uprights (2, 102) and said at least a first panel (31),
- passing cables (8) and/or wires and/or pipes inside said box-shaped body (5),
- covering the inside of said box-shaped body (5) using at least one covering sheet (7);
wherein, after fixing said first panel (31) and before fixing said first additional panel (32), the following axis are defined:
a vertical axis (Y) substantially normal relative to the ground (9), defining a direction of extension in height of the wall (1, 101), a horizontal axis (X) substantially perpendicular to said vertical axis (Y) and substantially parallel to both the ground (9) and the longitudinal direction of extension of the wall (1, 101), and a third axis (Z) substantially perpendicular to said horizontal axis (X) and to said vertical axis (Y), as well as substantially parallel to the ground (9), wherein the method comprises:
- applying at least one supporting template (10) for said first additional panel (32) resting the lower part (11a) of the insertion body (11) of a template (10) on at least a portion of the upper edge of said first panel (31),
- installing the at least a portion of the lower edge of said first additional panel (32) to be fixed, on the upper part (11b) of said insertion body (11),
- fixing said first additional panel (32) to said pair of uprights (2, 102),
- removing said template (10) by rotating it substantially by 90° about said third axis (Z), by means of a gripping handle (12) integral with said insertion body (11), in such a way as to simultaneously release said lower part (11a) and said upper part (11b) from the mutual support of said first panel (31) and said first additional panel (32).

11. The method according to the preceding claim, comprising the step of also fixing a first additional panel (32) on said first surface (21) at a distance from each other such as to allow the interposing of said box-shaped body (5) between said first panel (31) and said first additional panel (32), said first additional panel (32) being substantially coplanar with said first panel (31), said first panel (31) preferably being positioned underneath, relative to the ground (9), relative to said first additional panel (32).

12. The method according to any one of claims 7 to 9, wherein the association of said box-shaped body (5) with at least one of said uprights (2, 102) comprises the step of mounting a crosspiece (6) for supporting said box-shaped body (5), fixing a central portion (61) of said crosspiece (6) to the respective upright (2, 102) and fixing at least one peripheral portion (62) of said crosspiece (6) to said at least a first panel (31) and/or to said at least a first additional panel (32).

13. The method according to claim 11 or 12, wherein said template (10) comprises the insertion body (11) integral with the handle (12) for gripping by the user, said insertion body (11) having a lower part (11a) designed to rest on a first panel (31) fixed to a pair of uprights (2, 102) and an upper supporting part (11b) for a first additional panel (32) to be fixed on said pair of uprights (2, 102).

## Patentansprüche

1. Bausatz zum Montieren einer Trockenbauwand (1, 101), insbesondere zur Aufnahme von elektrischen Kabeln (8) und Rohrleitungen, umfassend:
- mindestens ein Paar Ständer (2, 102), die so angeordnet sind, dass sie auf dem Boden (9) ruhen;
- mindestens eine erste Platte (31) und mindestens eine erste zusätzliche Platte (32);
- wobei ein jeder der Ständer (2, 102) an mindestens einer ersten Fläche (1a, 101a) der Wand (1) eine erste Oberfläche (21) zum Befestigen der mindestens einen ersten Platte (31), die in der durch die erste Fläche (1a, 101a) definierten Ebene liegt, aufweist;
- mindestens einen kastenförmigen Körper (5), der mit den Ständern (2, 102) verbunden ist und ein Längsprofil, eine offene Seite und ein ihn verschließendes Abdeckblech aufweist, um Kabel (8), Drähte, Rohre und dergleichen zu enthalten, die auf der ersten Fläche (1a, 101a) positioniert werden können und dazu bestimmt sind, durch Befestigungsmittel (6, 61, 62) mit mindestens einem zwischen einem Ständer (2, 102) des Paares von Ständern (2, 102) und der mindestens einen ersten Platte (31) verbunden zu werden;
**dadurch gekennzeichnet, dass** der Bausatz eine Schablone (10) bereitstellt, die einen Einsetzkörper (11) umfasst, der einstückig mit einem Griff (12) zum Ergreifen durch den Benutzer ausgebildet ist, wobei der Einsetzkörper (11) einen unteren Teil (11a), der dazu bestimmt ist, auf der mindestens einen ersten Platte (31) zu ruhen, die an einem Paar von Ständern (2, 102) befestigt ist, und einen oberen Stützteil (11b) für die mindestens eine erste zusätzliche Platte (32), die an dem Paar von Ständern (2, 102) befestigt werden soll, aufweist; wobei der kastenförmige Körper (5) zwischen der ersten Platte (31) und der ersten zusätzlichen Platte (32) im Wesentlichen koplanar mit der ersten Platte (31) eingefügt werden soll, wobei die erste zusätzliche Platte (32) dazu bestimmt ist, an der ersten Oberfläche (21) befestigt zu werden.

2. Bausatz nach dem vorhergehenden Anspruch, wobei ein jeder der Ständer (2, 102) auf einer zweiten Fläche (1b, 101b), die der ersten Fläche (1a, 101a) gegenüberliegt, eine zweite Oberfläche (22) zum Befestigen mindestens einer zweiten Platte (4, 41) umfasst, die in der durch die zweite Fläche (1b, 101b) definierten Ebene parallel zu der durch die erste Fläche (1a, 101a) definierten Ebene liegt, um einen Spalt (19) zwischen der mindestens einen ersten Platte (31) und der mindestens einen zweiten Platte (4, 41) zu bilden.

3. Bausatz nach einem der vorhergehenden Ansprüche, wobei mindestens ein Ständer (2) der Ständer (2, 202) auf mindestens einer zwischen der ersten Oberfläche (21) und der zweiten Oberfläche (22) mindestens eine Aufweitung (25) zur Aufnahme mindestens eines Abschnitts des kastenförmigen Körpers (5) umfasst.

4. Bausatz nach dem vorhergehenden Anspruch, wenn er von Anspruch 2 abhängt, wobei der kastenförmige Körper (5) zwischen der zweiten Platte (41) und einer zweiten zusätzlichen Platte (42) im Wesentlichen koplanar mit der zweiten Platte (41) eingefügt ist, wobei die zweite zusätzliche Platte (42) dazu bestimmt ist, an der zweiten Oberfläche (22) befestigt zu werden.

5. Bausatz nach Anspruch 2, wobei der kastenförmige Körper (5) mindestens eine Außenkante (51) aufweist, die dazu bestimmt ist, mindestens mit der ersten Platte (31) verbunden zu werden.

6. Bausatz nach dem vorhergehenden Anspruch, umfassend mindestens ein Blech (7) zum Abdecken des kastenförmigen Körpers (5), zum Schützen der Elemente, die in dem kastenförmigen Körper (5) enthalten sind, und zum lösbaren Eingreifen mit der mindestens einen Außenkante (51) .

7. Bausatz nach einem der vorhergehenden Ansprüche, wobei die Befestigungsmittel (6, 61, 62) ein Querstück (6) zum Abstützen des kastenförmigen Körpers (5) umfassen, der einen Mittelabschnitt (61) zum Befestigen am jeweiligen Ständer (2, 102) und mindestens einen Umfangsabschnitt (62) zum Befestigen an der mindestens einen ersten Platte (31) umfasst.

8. Bausatz nach einem der vorhergehenden Ansprüche, wobei der untere Teil (11a) eine Aussparung (13) zum Einsetzen von mindestens einem Abschnitt der oberen Kante der ersten Platte (31) umfasst.

9. Bausatz nach dem vorhergehenden Anspruch, wobei der obere Teil (11b) einen Vorsprung (14) zum Abstützen mindestens eines Abschnitts der unteren Kante der ersten zusätzlichen Platte (31) umfasst.

10. Verfahren zur Herstellung einer Trockenbauwand (1, 101), insbesondere zur Aufnahme von elektrischen Kabeln (8) und Rohrleitungen, mit einem Bausatz nach Anspruch 1, umfassend eine Reihe von Schritten, bestehend aus:
- Positionieren mindestens eines Paares von Ständern (2, 102) auf dem Boden (9) des zu teilenden Raums, wobei ein jeder der Ständer (2, 102) an einer ersten Fläche (1a, 101a) und einer zweiten Fläche (1b, 101b), die der ersten Fläche (1a, 101a) gegenüberliegt, der Wand (1) eine erste Oberfläche (21) und eine zweite Oberfläche (22) aufweist,
- Befestigen jeweils mindestens einer ersten Platte (31) und mindestens einer zweiten Platte (4, 41) an der ersten Oberfläche (21) und an der zweiten Oberfläche (22), um einen Hohlraum (19) zwischen der mindestens einen ersten Platte (31) und der mindestens einen zweiten Platte (4, 41) zu bilden,
- Positionieren mindestens eines kastenförmigen Körpers (5), der dazu bestimmt ist, Kabel (8), Drähte, Rohre und dergleichen zu enthalten, auf der ersten Fläche (1a, 101a), Verbinden desselben unter Verwendung von Befestigungsmitteln (6, 61, 62) mit mindestens einem zwischen einem Ständer (2, 102) des Paares von Ständern (2, 102) und der mindestens einen ersten Platte (31),
- Führen von Kabeln (8) und/oder Drähten und/oder Rohren innerhalb des kastenförmigen Körpers (5),
- Abdecken der Innenseite des kastenförmigen Körpers (5) unter Verwendung mindestens eines Abdeckblechs (7); wobei nach dem Befestigen der ersten Platte (31) und vor dem Befestigen der ersten zusätzlichen Platte (32) die folgenden Achsen definiert werden:
eine vertikale Achse (Y) im Wesentlichen normal relativ zum Boden (9), die eine Höhenerstreckungsrichtung der Wand (1, 101) definiert, eine horizontale Achse (X) im Wesentlichen senkrecht zur vertikalen Achse (Y) und im Wesentlichen parallel sowohl zum Boden (9) als auch zur Längserstreckungsrichtung der Wand (1, 101), und eine dritte Achse (Z) im Wesentlichen senkrecht zur horizontalen Achse (X) und zur vertikalen Achse (Y) sowie im Wesentlichen parallel zum Boden (9), wobei das Verfahren Folgendes umfasst:
- Anwenden mindestens einer Stützschablone (10) für die erste zusätzliche Platte (32), die den unteren Teil (11a) des Einsetzkörpers (11) einer Schablone (10) auf mindestens einem Abschnitt der oberen Kante der ersten Platte (31) abstützt,
- Installieren des mindestens einen Abschnitts der unteren Kante der ersten zusätzlichen Platte (32), die befestigt werden soll, auf dem oberen Teil (11b) des Einsetzkörpers (11),
- Befestigen der ersten zusätzlichen Platte (32) an dem Paar von Ständern (2, 102),
- Entfernen der Schablone (10) durch deren Drehen im Wesentlichen um 90° um die dritte Achse (Z) mittels eines Handgriffs (12), der einstückig mit dem Einsetzkörper (11) ausgebildet ist, um gleichzeitig den unteren Teil (11a) und den oberen Teil (11b) von der gegenseitigen Abstützung der ersten Platte (31) und der ersten zusätzlichen Platte (32) freizugeben.

11. Verfahren nach dem vorhergehenden Anspruch, umfassend auch den Schritt zum Befestigen einer ersten zusätzlichen Platte (32) an der ersten Oberfläche (21) in einem Abstand voneinander, um das Einfügen des kastenförmigen Körpers (5) zwischen der ersten Platte (31) und der ersten zusätzlichen Platte (32) zu ermöglichen, wobei die erste zusätzliche Platte (32) im Wesentlichen koplanar mit der ersten Platte (31) ist, wobei die erste Platte (31) vorzugsweise relativ zum Boden (9) relativ zur ersten zusätzlichen Platte (32) darunter positioniert ist.

12. Verfahren nach einem der Ansprüche 7 bis 9, wobei die Assoziation des kastenförmigen Körpers (5) mit mindestens einem der Ständer (2, 102) den Schritt zum Montieren eines Querstücks (6) zum Abstützen des kastenförmigen Körpers (5), zum Befestigen eines Mittelabschnitts (61) des Querstücks (6) an dem jeweiligen Ständer (2, 102) und zum Befestigen mindestens eines Umfangsabschnitts (62) des Querstücks (6) an der mindestens einen ersten Platte (31) und/oder an der mindestens einen ersten zusätzlichen Platte (32) umfasst.

13. Verfahren nach Anspruch 11 oder 12, wobei die Schablone (10) den Einsetzkörper (11) umfasst, der einstückig mit dem Griff (12) zum Ergreifen durch den Benutzer ausgebildet ist, wobei der Einsetzkörper (11) einen unteren Teil (11a), der dazu ausgelegt ist, auf einer ersten Platte (31) zu ruhen, die an einem Paar von Ständern (2, 102) befestigt ist, und einen oberen Stützteil (11b) für eine erste zusätzliche Platte (32), die an dem Paar von Ständern (2, 102) befestigt werden soll, aufweist.

## Revendications

1. Kit de montage d'une cloison sèche (1, 101), en particulier pour accueillir des câbles électriques (8) et des tuyauteries, comprenant :
- au moins une paire de montants (2, 102) disposés pour reposer sur le sol (9) ;
- au moins un premier panneau (31) et au moins un premier panneau supplémentaire (32) ;
- chacun desdits montants (2, 102) comportant, sur au moins une première face (1a, 101a) de la cloison (1), une première surface (21) de fixation de l'au moins un premier panneau (31) reposant dans le plan défini par ladite première face (1a, 101a) ;
- au moins un corps en forme de boîte (5) relié auxdits montants (2, 102) et ayant un profil longitudinal, un côté ouvert et une feuille de recouvrement le fermant, afin de contenir des câbles (8), des fils, des tuyaux et similaires, pouvant être positionnés sur ladite première face (1a, 101a) et conçus pour être reliés, par des moyens de fixation (6, 61, 62), à au moins un élément entre un montant (2, 102) de ladite paire de montants (2, 102) et ledit au moins un premier panneau (31) ;
**caractérisé en ce que** ledit kit fournit un modèle (10) comprenant un corps d'insertion (11) solidaire d'une poignée (12) pour la préhension par l'utilisateur, ledit corps d'insertion (11) comportant une partie inférieure (11a) conçue pour reposer sur l'au moins un premier panneau (31) fixé à une paire de montants (2, 102) et une partie supérieure de support (11b) pour l'au moins un premier panneau supplémentaire (32) à fixer sur ladite paire de montants (2, 102) ;
dans lequel ledit corps en forme de boîte (5) doit être interposé entre ledit premier panneau (31) et ledit premier panneau supplémentaire (32) essentiellement coplanaire avec ledit premier panneau (31), ledit premier panneau supplémentaire (32) étant conçu pour être fixé à ladite première surface (21).

2. Kit selon la revendication précédente, dans lequel chacun desdits montants (2, 102) comprend, sur une deuxième face (1b, 101b), opposée à ladite première face (1a, 101a), une deuxième surface (22) de fixation d'au moins un deuxième panneau (4, 41) reposant dans le plan défini par ladite deuxième face (1b, 101b) parallèle au plan défini par ladite première face (1a, 101a), de manière à former un espacement (19) entre ledit au moins un premier panneau (31) et ledit au moins un deuxième panneau (4, 41).

3. Kit selon l'une quelconque des revendications précédentes, dans lequel au moins un montant (2) desdits montants (2, 202) comprend, sur au moins une surface entre ladite première surface (21) et ladite deuxième surface (22), au moins un évasement (25) pour accueillir au moins une partie dudit corps en forme de boîte (5).

4. Kit selon la revendication précédente, lorsqu'elle dépend de la revendication 2, dans lequel ledit corps en forme de boîte (5) est interposé entre ledit deuxième panneau (41) et un deuxième panneau supplémentaire (42) essentiellement coplanaire avec ledit deuxième panneau (41), ledit deuxième panneau supplémentaire (42) étant conçu pour être fixé à ladite deuxième surface (22).

5. Kit selon la revendication 2, dans lequel ledit corps en forme de boîte (5) comporte au moins un bord extérieur (51) conçu pour être relié au moins audit premier panneau (31) .

6. Kit selon la revendication précédente, comprenant au moins une feuille (7) pour recouvrir ledit corps en forme de boîte (5), pour protéger les éléments contenus à l'intérieur dudit corps en forme de boîte (5) et pour se mettre en prise de manière amovible avec ledit au moins un bord extérieur (51).

7. Kit selon l'une quelconque des revendications précédentes, dans lequel lesdits moyens de fixation (6, 61, 62) comprennent une traverse (6) pour supporter ledit corps en forme de boîte (5) comprenant une partie centrale (61) pour la fixation au montant respectif (2, 102) et au moins une partie périphérique (62) pour la fixation audit au moins un premier panneau (31).

8. Kit selon l'une quelconque des revendications précédentes, dans lequel ladite partie inférieure (11a) comprend un renfoncement (13) pour l'insertion d'au moins une partie du bord supérieur dudit premier panneau (31) .

9. Kit selon la revendication précédente, dans lequel ladite partie supérieure (11b) comprend une saillie (14) pour supporter au moins une partie du bord inférieur dudit premier panneau supplémentaire (31).

10. Procédé de construction d'une cloison sèche (1, 101), notamment pour accueillir des câbles électriques (8) et des tuyauteries, avec un kit selon la revendication 1, comprenant une série d'étapes constituée de :
- positionner au moins une paire de montants (2, 102) sur le sol (9) de la pièce à diviser, chacun desdits montants (2, 102) comportant, sur une première face (1a, 101a) et une deuxième face (1b, 101b), opposée à ladite première face (1a, 101a), de la cloison (1), une première surface (21) et une deuxième surface (22),
- fixer au moins un premier panneau (31) et au moins un deuxième panneau (4, 41), respectivement, sur ladite première surface (21) et sur ladite deuxième surface (22), de manière à former un espace creux (19) entre ledit au moins un premier panneau (31) et ledit au moins un deuxième panneau (4, 41),
- positionner sur ladite première face (1a, 101a) au moins un corps en forme de boîte (5) conçu pour contenir des câbles (8), des fils, des tuyaux et similaires, en le reliant, à l'aide de moyens de fixation (6, 61, 62), à au moins un montant entre un montant (2, 102) de ladite paire de montants (2, 102) et ledit au moins un premier panneau (31),
- passer des câbles (8) et/ou de fils et/ou des tuyaux à l'intérieur dudit corps en forme de boîte (5),
- recouvrir l'intérieur dudit corps en forme de boîte (5) à l'aide d'au moins une feuille de recouvrement (7) ; dans lequel, après avoir fixé ledit premier panneau (31) et avant de fixer ledit premier panneau supplémentaire (32), les axes suivants sont définis :
un axe vertical (Y) essentiellement normal par rapport au sol (9), définissant une direction d'extension en hauteur de la cloison (1, 101), un axe horizontal (X) essentiellement perpendiculaire audit axe vertical (Y) et essentiellement parallèle à la fois au sol (9) et à la direction longitudinale d'extension de la cloison (1, 101), et un troisième axe (Z) essentiellement perpendiculaire audit axe horizontal (X) et audit axe vertical (Y), ainsi que essentiellement parallèle au sol (9), dans lequel le procédé comprend :
- appliquer au moins un modèle de support (10) pour ledit premier panneau supplémentaire (32) en faisant reposer la partie inférieure (11a) du corps d'insertion (11) d'un modèle (10) sur au moins une partie du bord supérieur dudit premier panneau (31),
- installer l'au moins une partie du bord inférieur dudit premier panneau supplémentaire (32) à fixer, sur la partie supérieure (11b) dudit corps d'insertion (11),
- fixer ledit premier panneau supplémentaire (32) à ladite paire de montants (2, 102),
- retirer ledit modèle (10) en le faisant pivoter essentiellement de 90° autour dudit troisième axe (Z), au moyen d'une poignée de préhension (12) solidaire dudit corps d'insertion (11), de manière à libérer simultanément ladite partie inférieure (11a) et ladite partie supérieure (11b) du support mutuel dudit premier panneau (31) et dudit premier panneau supplémentaire (32) .

11. Procédé selon la revendication précédente, comprenant l'étape consistant à fixer également un premier panneau supplémentaire (32) sur ladite première surface (21) à une distance l'un de l'autre de manière à permettre l'interposition dudit corps en forme de boîte (5) entre ledit premier panneau (31) et ledit premier panneau supplémentaire (32), ledit premier panneau supplémentaire (32) étant essentiellement coplanaire avec ledit premier panneau (31), ledit premier panneau (31) étant de préférence positionné en dessous, par rapport au sol (9), par rapport audit premier panneau supplémentaire (32).

12. Procédé selon l'une quelconque des revendications 7 à 9, dans lequel l'association dudit corps en forme de boîte (5) avec au moins l'un desdits montants (2, 102) comprend l'étape consistant à monter une traverse (6) pour supporter ledit corps en forme de boîte (5), à fixer une partie centrale (61) de ladite traverse (6) au montant (2, 102) respectif et à fixer au moins une partie périphérique (62) de ladite traverse (6) audit au moins un premier panneau (31) et/ou audit au moins un premier panneau supplémentaire (32).

13. Procédé selon la revendication 11 ou 12, dans lequel ledit modèle (10) comprend le corps d'insertion (11) solidaire de la poignée (12) pour la préhension par l'utilisateur, ledit corps d'insertion (11) comportant une partie inférieure (11a) conçue pour reposer sur un premier panneau (31) fixé à une paire de montants (2, 102) et une partie supérieure de support (11b) pour un premier panneau supplémentaire (32) à fixer sur ladite paire de montants (2, 102).
